# EUROPEAN PATENT APPLICATION

(11) **EP 2 249 551 A1**
(43) Date of publication of application: **10.11.2010**
(21) Application number: 09714299.6
(22) Date of filing: 16.02.2009
(51) Int. Cl.: H04M 1/00, H04M 1/247, H04M 1/725, H04W 48/18, H04W 88/06

(54) **MOBILE COMMUNICATION TERMINAL, DISPLAY METHOD USED FOR MOBILE COMMUNICATION TERMINAL, AND DISPLAY CONTROL PROGRAM**

(30) Priority: 27.02.2008 JP 2008046771
(71) Applicant: NEC Corporation, Minato-ku Tokyo 108-8001 (JP)
(72) Inventor: KOKUBU, Akiteru, Tokyo 108-8001 (JP)
(74) Representative: Betten & Resch
(86) International application number: PCT/JP2009/053108
(87) International publication number: WO 2009/107566

(57) **Abstract**

Provided is a mobile communication terminal wherein the kind of a communication system scheduled to be used for next communication can be distinguished obviously at a glance.

Characters corresponding to the communication system scheduled to be used for next communication are displayed on a display means.

## Description

### TECHNICAL FIELD

The present invention relates to a mobile communication terminal, a display method for the mobile communication terminal and a display control program.

### BACKGROUND ART

A plurality of kinds of wireless communication systems and wireless communication services (hereinafter, might be referred to collectively as "communication bearers") have been provided recently. A mobile communication terminal which can connect to the plurality of kinds of wireless communication systems has been developed. Specifically, the number of models of the mobile communication terminals increases, which includes not only a public line antenna module but also a function which enables short-range wireless communication, such as a WLAN (Wireless Local Area Network) antenna module. In the models of the mobile communication terminals, it is possible to select manually or automatically any one of various wireless communication systems and to perform data communication.

A WLAN communication bearer is used, as a common usage, when a browser is used, in a WLAN communication area where it is possible to connect to a WLAN access point, because high-speed communication can be performed by using the WLAN communication bearer compared with a public line communication bearer. The public line communication bearer is used outside the WLAN communication area. A mobile communication terminal automatically performs the communication bearer selection (see Patent Literature 1 and 2). Otherwise, a user manually selects and converts the communication bearer to be used. Wide-range usage which is suitable to usage scenes becomes possible in this way.
Patent Literature 1: Japanese Patent Application laid-Open No. 2003-309874
Patent Literature 2: Japanese Patent Application laid-Open No. 2007-259039

### DISCLOSURE OF INVENTION

### TECHNICAL PROBLEM

Patent Literature 2 discloses a configuration described below. A mobile communication terminal of Patent Literature 2 displays a radio wave icon indicating a reception level of a radio wave on a display, for example, an LCD (Liquid Crystal Display) and the like. The mobile communication terminal indicates the communication bearer to be used by using a color of the radio wave icon.

The configuration described in Patent Literature 2 includes inconvenience that just seeing the color of the radio wave icon cannot get across what communication bearer is used, unless correspondence relation between the color of the radio wave icon and a kind of the communication bearer is kept in mind.

The present invention is made to solve the above problem. The object thereof is to provide a mobile communication terminal in which the kind of the communication bearer to be used for next communication can be distinguished obviously at a glance, a display method for the mobile communication terminal, and a display control program.

### TECHNICAL SOLUTION

The mobile communication terminal of the present invention includes display means for displaying a character corresponding to a communication system scheduled to be used for next communication.

The display method used in the mobile communication terminal of the present invention includes, selecting alternatively a communication system scheduled to be used for next communication from a plurality of kinds of predetermined communication systems, and displaying a character corresponding to the selected communication system on display means installed in a mobile communication terminal.

A display control program of the present invention includes, alternatively selecting a communication system scheduled to be used for next communication from a plurality of kinds of predetermined communication systems, and causing display means installed in a mobile communication terminal to display a character corresponding to the selected communication system.

### ADVANTAGEOUS EFFECTS OF INVENTION

According to the present invention, a user of the mobile communication terminal can obviously distinguish what communication system to be used for next communication by the mobile communication terminal at a glance.

### BRIEF DESCRIPTION OF DRAWINGS

FIG. 1 is a diagram illustrating an example of screens of display units installed in mobile communication terminals in first to third embodiments of the present invention.
FIG. 2 is a schematic view of an example of a whole configuration of a wireless communication system which the mobile communication terminals in the first to third embodiments can use.
FIG. 3 is a block diagram showing an electrical configuration of the mobile communication terminals in the first to third embodiments.
FIG. 4a is a diagram illustrating an example of a display of a browser screen in an unimproved mobile communication terminal.
FIG. 4b is a diagram illustrating an example of a display of a browser screen in an unimproved mobile communication terminal of the second and third embodiments.
FIG. 5a is a diagram illustrating an example of a display of a browser screen with a WLAN communication bearer icon in the mobile communication terminal of the second and third embodiments.
FIG. 5b is a diagram illustrating an example of a display of a browser screen with a public line communication bearer icon in the mobile communication terminal of the second and third embodiments.
FIG. 6 is a schematic view showing kinds of communication mode which can be set in the mobile communication terminal of the second and third embodiments.
FIG. 7a is a diagram illustrating an example of relations between each communication condition of a WLAN network and a public line network and the communication bearer icon displayed on the screen of the display unit, when WLAN priority is set, in the mobile communication terminal of the third embodiment.
FIG. 7b is a diagram illustrating an example of relations between each communication condition of a WLAN network and a public line network and the communication bearer icon displayed on the screen of the display unit, when public line priority is set, in the mobile communication terminal of the third embodiment.
FIG. 8 is a flowchart of operation processes which is performed when a control unit included in the mobile communication terminal of the third embodiment monitors each communication condition of a preferential network and a non-preferential network.
FIG. 9 is a diagram illustrating an operational condition after a preferential communication mode is set in the first embodiment.
FIG. 10 is a diagram illustrating the mobile communication terminal of a fourth embodiment of the present invention.
FIG. 11 is a diagram illustrating an embodiment of display method of the present invention.

### REFERENCE NUMERALS

- 1: mobile communication terminal
- 2: operator (public line) network (communication system)
- 3: WLAN access network (communication system)
- 3a: wireless LAN access point
- 5: wireless base station
- 7: browser display screen
- 9: communication mode setting
- 9a: WLAN priority
- 9b: public line priority
- 9c: WLAN fixing
- 9d: public line fixing
- 105: ROM (communication mode setting means)
- 107: display unit (icon display means)
- 111: control unit (icon display means, communication mode setting means)
- 201: communication bearer icon (icon)

### BEST MODE FOR CARRING OUT THE INVENTION

With reference to drawings, embodiments of the present invention are described below in detail.

### (First embodiment)

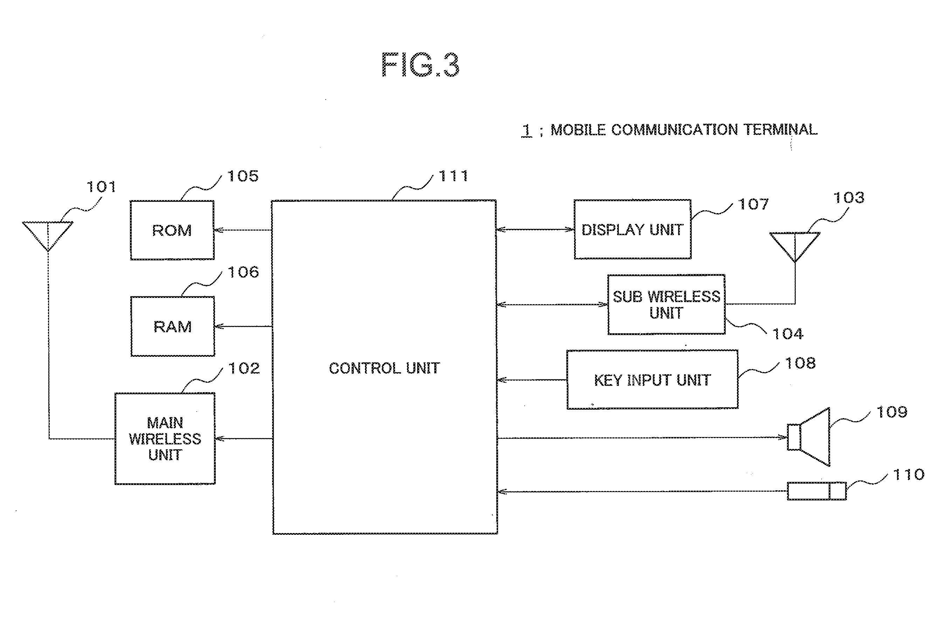

As shown in FIG. 3, a mobile communication terminal 1 in a first embodiment of the present invention includes a ROM (Read Only Memory) 105, a display unit 107 and a control unit 111. The display unit 107 and the control unit 111 constitute an icon display means (display means). The icon display means 107, 111 displays a communication system which is selected when next communication occurs, on a screen thereof by using an icon. The ROM 105 and the control unit 111 constitute a communication mode setting means. The communication mode setting means 105, 111 includes a function which sets, as a mode to be used, one of a plurality of communication modes including at least a preferential communication mode. The preferential communication mode means a mode in which a communication system which a user registers in advance as a preferential communication system in a plurality of communication systems is preferentially used when communication is required.

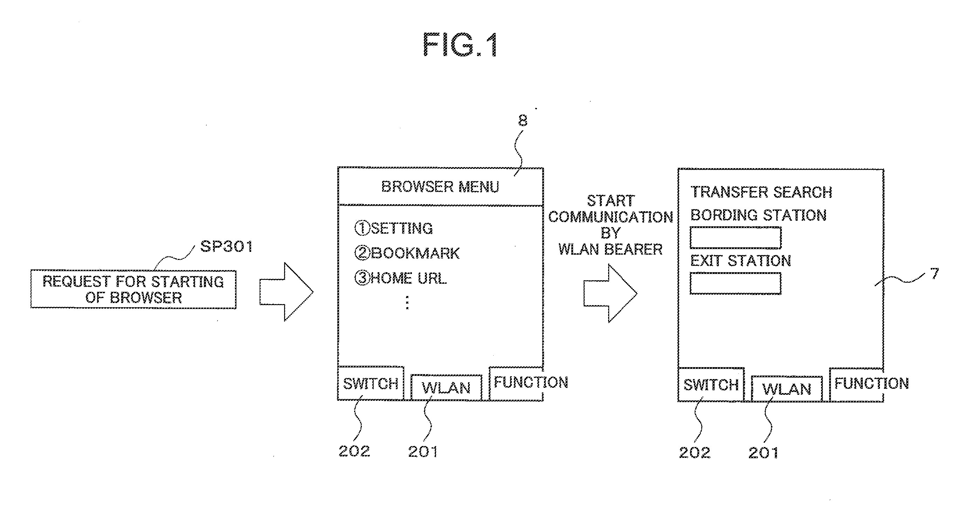

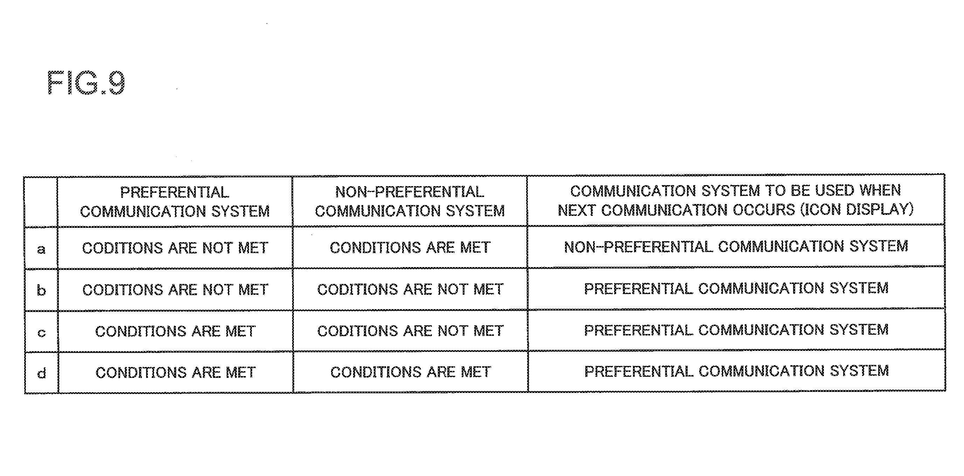

As shown in FIG. 9, the control unit 111 selects the preferential communication system when the preferential communication mode is set by the communication mode setting means 105, 111 and the preferential communication system meets predetermined conditions (when the conditions are met). The control unit 111 causes the icon display means 107, 111 to display an icon 201 of the preferential communication system, as a communication system which is used when next communication occurs, as shown in FIG. 1. When the preferential communication system does not meet the predetermined condition above described (when the conditions are not met, (see FIG. 9)), the control unit 111 alternatively selects the non-preferential communication system which meets the predetermined condition. The control unit 111 causes the icon display means 107, 111 to display an icon 201 of the non-preferential communication system, as the communication system which is used when next communication occurs.

In the preferential communication mode, as shown in FIG. 9, when the non-preferential communication system meets the condition even if the preferential communication system does not meet the condition (row a in FIG. 9), the non-preferential communication system is displayed as an icon. In the other case, the preferential communication system is displayed as an icon. That is, one of the cases in which the preferential communication system is displayed as an icon is a case in which the preferential communication system meets the condition and the non-preferential communication system also meets the condition (row d in FIG. 9). Another one of the cases in which the preferential communication system is displayed as an icon is a case in which the preferential communication system does not meet the condition and the non-preferential communication system does not meet the condition (row b in FIG. 9). Further, another one of the cases in which the preferential communication system is.displayed as an icon is a case in which the preferential communication system meets the condition and the non-preferential communication system does not meet the condition (row c in FIG. 9).

According to the first embodiment, the communication system which is selected and used when next communication occurs is displayed as an icon including characters, as shown in FIG. 1, for example. Thereby, the communication system which is scheduled to be used when next communication occurs can be clearly distinguished at a glance.

### (Second embodiment)

As shown in FIG. 3, a mobile communication terminal 1 in a second embodiment of the present invention includes an icon display means 107, 111, a communication mode setting means 105, 111 and a control unit 111. The icon display means 107, 111 and the communication mode setting means 105, 111 have the same structure as the icon display means 107, 111 and the communication mode setting means 105, 111 in the first embodiment, respectively. When a preferential communication mode is set by the communication mode setting means 105, 111, and a preferential communication system is in a communication area thereof, the control unit 111 of the second embodiment selects the preferential communication system. Further, when the preferential communication mode is set and the preferential communication system transfers from an out-of-communication area to the in-communication area thereof, the control unit 111 also selects the preferential communication system. The control unit 111 causes the icon display means 107, 111 to display an icon 201 of the preferential communication system, as the communication system which is used when next communication occurs. Furthermore, when the preferential communication system is in the out-of-communication area thereof or transfers from the in-communication area to the out-of-communication area thereof, the control unit 111 alternatively selects a non-preferential communication system which is in the in-communication area thereof. The control unit 111 causes the icon display means 107, 111 to display an icon 201 of the selected non-preferential communication system, as the communication system which is used when next communication occurs.

In addition, setting of the preferential communication mode by the communication mode setting means may be configured to enable setting for each communication application.

A plurality of kinds of available communication systems includes at least a public line communication bearer which performs communication by establishing a communication channel to a wireless base station and a WLAN bearer which performs communication by establishing a communication channel to a wireless LAN access point

Further, a fixed communication mode, in which only communication system which is registered in advance as a fixed communication system in the plurality of kinds of communication system by a user is used when communication is required, may be added as one of communication modes which are set in the communication mode setting means.

Furthermore, icon is displayed within a browser display screen 7 as shown in FIG. 1.

According to the configuration of the second embodiment, like the first embodiment, the communication system which is selected and used when next communication occurs is displayed by using an icon including characters, as shown FIG. 1. Therefore, the communication system which is scheduled to be used when next communication occurs can be distinguished obviously at a glance.

### (Third embodiment)

A third embodiment of the present invention is described below.

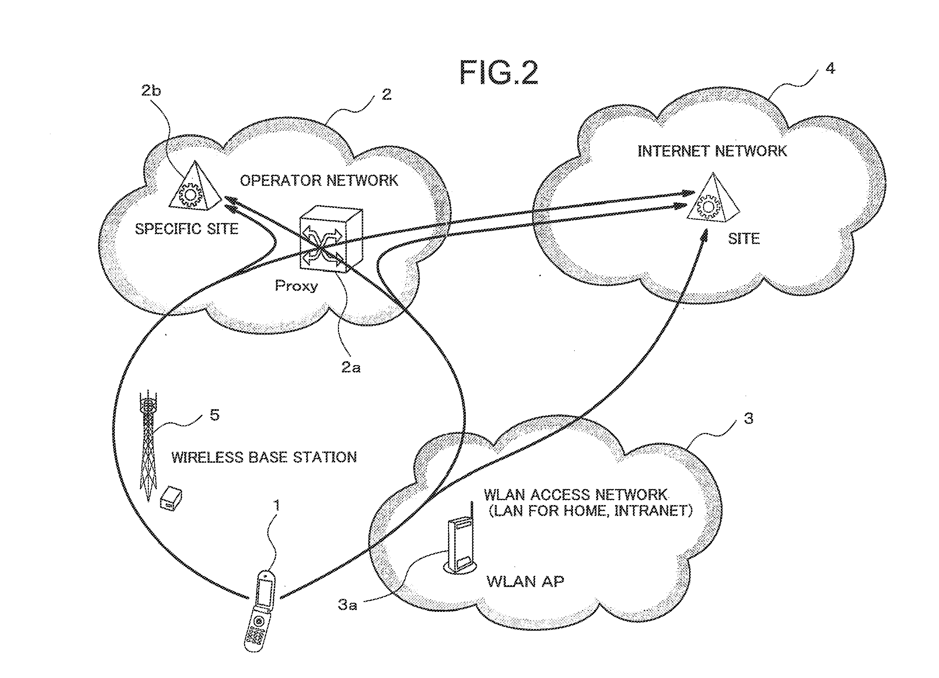

Referring to FIG. 2, summaries of configurations of a plurality of wireless communication systems to which a mobile communication terminal of the third embodiment can connect are described. The mobile communication terminal 1 of the third embodiment is a mobile phone. As shown in FIG. 2, the mobile communication terminal 1 can directly or indirectly connect to an operator (public line) network 2, a WLAN access network 3 and the Internet network 4. Specifically, the mobile communication terminal 1 establishes a communication channel to a base station 5 and connects to the operator network 2. The mobile communication terminal 1 can browse a specific site 2b in the operator network 2 and can connect to the Internet network 4 via a proxy server 2a in the operator network 2. Further the mobile communication terminal 1 establishes a communication channel to a WLAN access point 3a in the WLAN access network 3. The mobile communication terminal I can connect to the operator network 2 and the Internet network 4 via the WLAN access point 3a. In addition, the WLAN access network 3 includes a Local Area Net work and an intranet.

Referring to FIG. 3, an electrical configuration of the mobile communication terminal 1 is described below.

The mobile communication terminal 1 of the third embodiment includes a main antenna 101, a main wireless unit 102, sub-antenna 103, sub-wireless unit 104, a ROM 105, RAM (Random Access Memory) 106, the display unit 107, a key input unit 108, a speaker unit 109, a microphone unit 110, and the control unit (CPU(Central Processing Unit)) 111.

The main wireless unit 102 establishes a communication channel to the wireless base station 5 via the main antenna 101, and transmits and receives a wireless signal thereby. The sub-wireless unit 104 includes a wireless LAN chip. The sub-wireless unit 104 establishes a communication channel to the WLAN access point 3a via the sub-antenna 103 and performs short-range wireless communication thereby. The ROM 105 is a memory device which stores various setting information of the mobile communication terminal 1 and software programs thereof. The RAM 106 is a memory device which temporarily stores various data. The display unit 107 is a device displaying phone number and various setting information, etc. The display unit 107 is composed of LCD (Liquid Crystal Display), for example. The key input unit 108 is a device receiving key input. The speaker unit 109 is a device outputting voice. The microphone unit 110 is a device for inputting voice. The control unit (CPU) 111 includes a computer configuration which has a micro computer controlling each unit of the mobile communication unit 1. The ROM 105 stores an icon display control program which causes the control unit 111, as mentioned below, to display icon indicating a communication system to be used next time (see FIG. 1, FIG. 4b to FIG. 8).

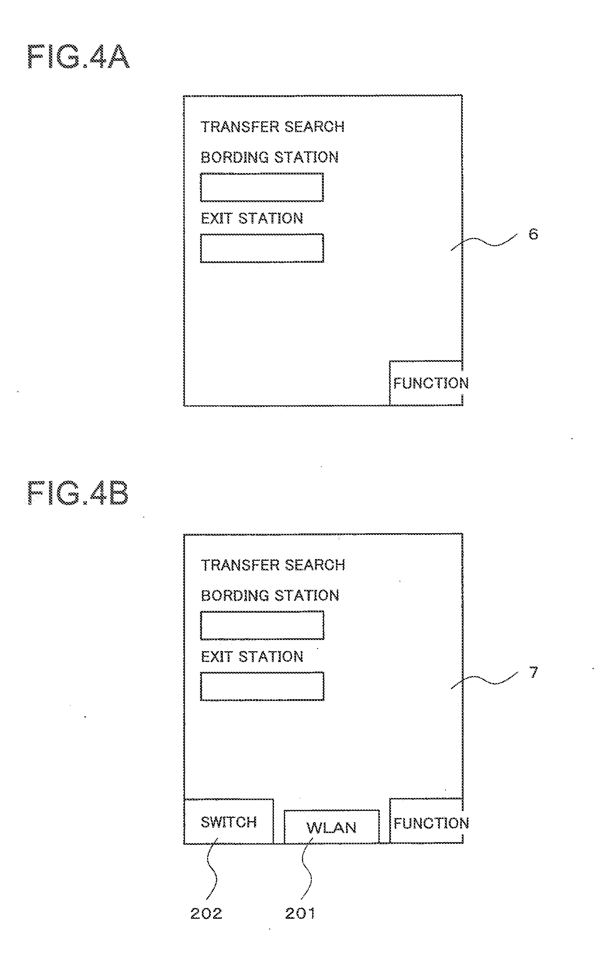

FIG. 4a is a diagram illustrating a common browser display screen 6 which is displayed on a display unit of a mobile communication terminal. It is possible to browse a home page put on the Internet by using a browser.

FIG. 4b is a diagram illustrating a browser display screen 7 which is displayed on the display unit 107 of the mobile communication terminal I of the third embodiment. The browser display screen 7 displays a communication bearer icon 201 and a switching icon 202. The communication bearer icon 201 shows a communication bearer (wireless communication system) which is scheduled to be used and connected for next communication, during browsing a browser. When seeing the communication bearer icon 201 on the browser display screen 7, a user of the mobile communication terminal 1 can distinguish the communication bearer to be connected for next communication.

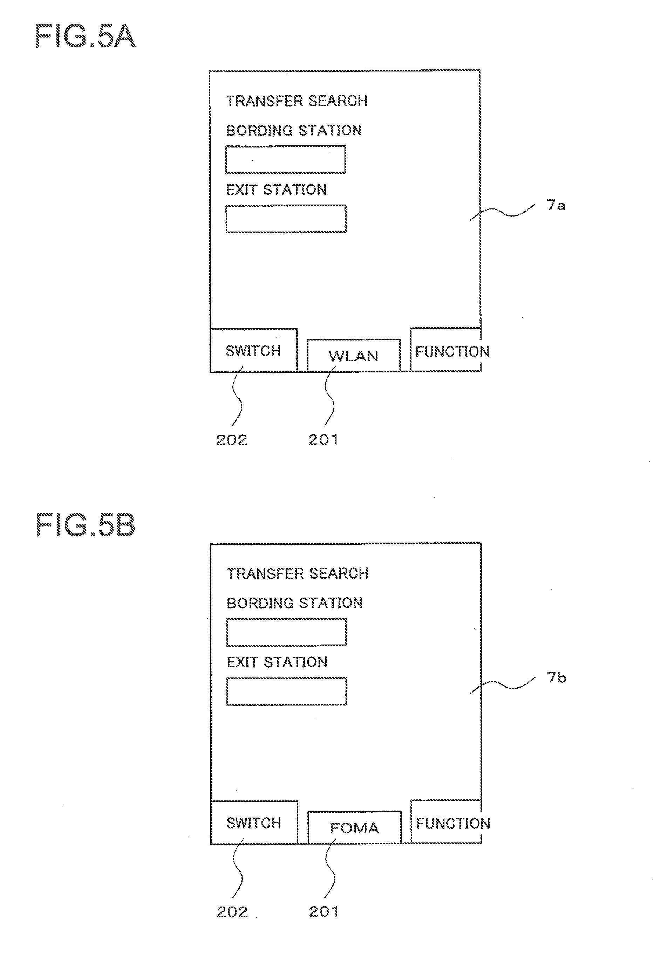

FIG. 5a illustrates a browser display screen 7a. The browser display screen 7a indicates that a communication bearer which is scheduled to be used for next communication is a WLAN communication bearer, by the communication bearer icon 201. FIG. 5b illustrates a browser display screen 7b. The browser display screen 7b indicates that a communication bearer which is scheduled to be used for next communication is a public line communication bearer, for example, FOMA (Freedom of Mobile Multimedia Access), by the communication bearer icon 201. The switching icon 202 in FIG. 5a and FIG.5b is used to switch manually, like a toggle, the communication bearer which is scheduled to be used for next communication, from one of the WLAN communication bearer and the public line communication bearer to the other.

In addition, the communication bearer icon 201 including a character as shown in FIG. 5a may be described as a WLAN communication bearer icon. The communication bearer icon 201 including a character as shown in FIG. 5b may be described as a public line communication bearer icon.

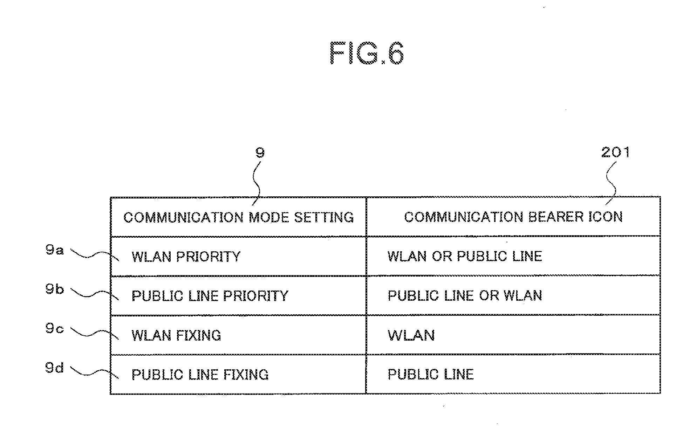

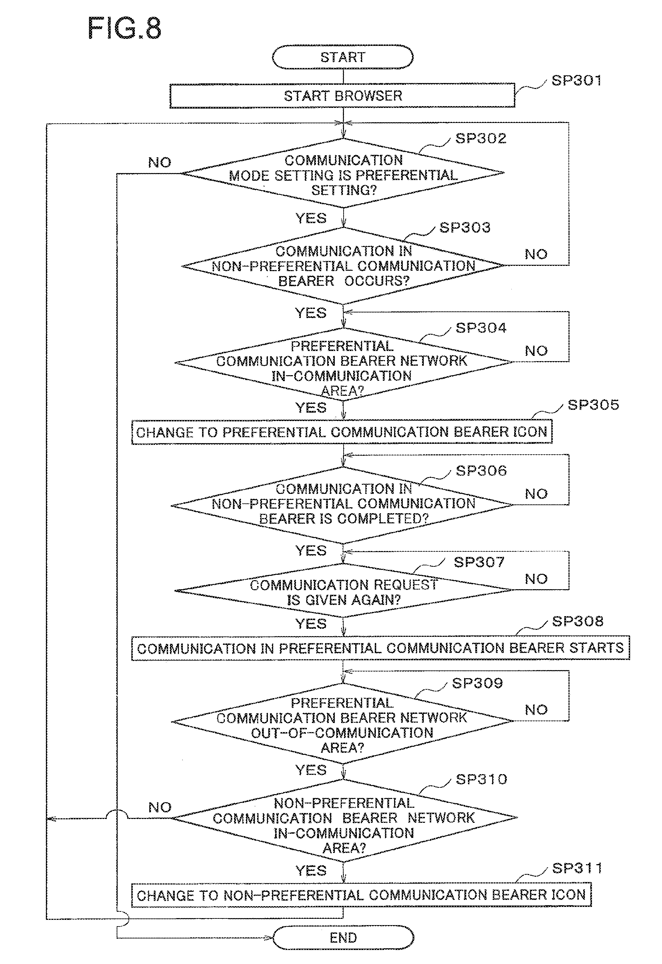

In the third embodiment, as shown in FIG. 1, when a browser of the mobile communication terminal 1 starts (see FIG. 8 (step SP301)) and a browser menu 8 is displayed on the display unit 107, the communication bearer icon 201 and the switching icon 202 are also displayed thereon. Then, the character of the communication bearer icon 201 is determined according to one which is set from four kinds of the communication mode settings 9 shown in FIG.6. Contents information of these various communication mode settings 9 is stored in the ROM 105.

As shown in FIG. 6, the communication mode settings 9 includes four kinds of communication mode settings, that is, WLAN priority 9a, public line priority 9b, WLAN fixing 9c and public line fixing 9d. A WLAN priority setting 9a is a mode in which the WLAN communication bearer is preferentially used when both the WLAN communication bearer and the public line communication bearer are available. The public line priority setting 9b is a mode in which the public line communication bearer is preferentially used when both the WLAN communication bearer and the public line communication bearer are available. The WLAN fixing 9c is a mode in which only the WLAN communication is used. The public line fixing 9d is a mode in which only the public line communication bearer is used.

In the third embodiment, when the WLAN priority setting 9a is set, the WLAN communication bearer is preferentially used even if the public line communication bearer is excellent in terms of a reception level, cost, or communication rate. When the public line priority setting 9b is set, the public line priority setting 9a is preferentially used even if the WLAN communication bearer is excellent in terms of the reception level, the cost, or the communication rate. When the WLAN fixing 9c is set, only WLAN communication bearer is used even if the public line communication bearer is excellent in terms of the reception level, the cost, or the communication rate. When the public line fixing 9d is set, only public line communication bearer is used even if the WLAN communication bearer is excellent in terms of the reception level, the cost, or the communication rate.

When the WLAN priority setting 9a is set and when the public line priority setting 9b is set, any one of the WLAN communication bearer and the public line communication bearer may be available. Therefore, any one of the WLAN communication bearer icon and the public line communication bearer icon may be displayed as the communication bearer icon 201. When the WLAN fixing 9c is set and when the public line fixing 9d is set, available communication bearer is fixed. Therefore, when the communication bearer icon 201 is displayed, one of the WLAN communication bearer icon and the public line communication bearer icon is fixed.

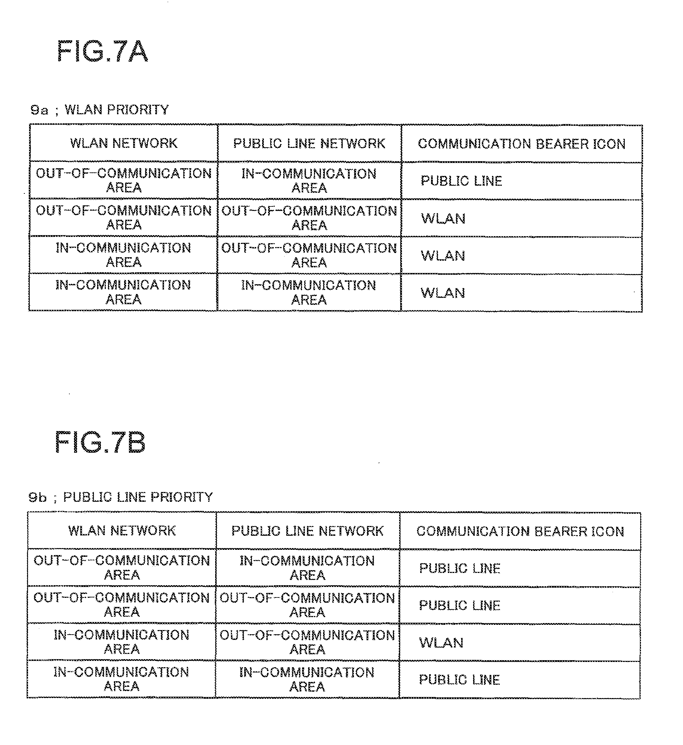

Specifically, when the communication mode setting 9 is set to the WLAN priority 9a, a kind of the communication bearer icon 201 displayed on the display unit 107 is determined, for example, depending on communication conditions of various communication bearers, as shown in FIG. 7a. That is, since the public line communication bearer is used when a WLAN network is in the out-of-communication area and the public line network is in the in-communication area, the public line communication bearer icon is displayed on the display unit 107. In the other conditions, that is, when both the WLAN network and the public line network are in the in-communication area or in the out-of-communication area, and when the WLAN network is in the in-communication area and the public line network is in the out-of-communication area, the WLAN communication bearer icon is displayed on the display unit 107.

When the communication mode setting 9 is set to the public line priority 9b, a kind of the communication bearer icon 201 displayed on the display unit 107 is determined, as described above, depending on the communication conditions of the various communication bearers, as shown in FIG. 7a. For example, when the public line network is in the out-of-communication area and the WLAN network is in the in-communication area, the WLAN communication bearer icon is displayed on the display unit 107. In the other conditions, that is, when both the WLAN network and the public line network are in the in-communication area or in the out-of-communication area, and when the public line network is in the in-communication area and the WLAN network is in the out-of-communication area, the public line communication bearer icon is displayed on the display unit 107.

When the browser starts, the control unit 111 refers to the communication mode setting 9 in the ROM 105 (e.g. for each communication application). When the communication mode setting 9 is the WLAN priority 9a or the public line priority 9b, the control unit 111 checks whether the WLAN network is in the in-communication area or in the out-of-communication area, and whether the public line network is in the in-communication area or in the out-of-communication area. The control unit 111 determines the kind of the communication bearer icon 201 to be displayed, based on the communication conditions, and displays the determined communication bearer icon 201 on the display unit 107.

As shown in FIG. 1, the communication bearer icon 201 of the WLAN communication bearer may be displayed on the screen of the browser menu 8. In this case, when a user completes entering, from the browser menu 8, URL (Uniform Resource Locator) to which the user wants to connect, the mobile communication terminal 1 starts communication by using the WLAN communication bearer. Thereby, the mobile communication terminal 1 can obtains URL information. The described above is the method for determining the communication bearer icon at the time of starting of the browser (step SP301 (see FIG. 8)).

An example of the operation is described below, which is related to a display of the communication bearer icon 201 during data communication and after starting of the browser in operations which the control unit 111 performs in the third embodiment.

When communication is performed after starting of the browser, for example, the communication is performed by using the communication bearer displayed on the communication bearer icon 201. When the communication mode setting 9 is set to the WLAN priority 9a or the public line priority 9b, the display of the communication bearer icon 201 may change (switch). For example, since a communication bearer (preferential communication bearer) which is set to preferential use is in the out-of-communication area, a different communication bearer (non-preferential communication bearer) may be used by necessity. In such conditions, if a user having the mobile communication terminal 1 moves, the preferential communication bearer may change from the out-of-communication area to the in-communication area. In this case, communication by using the preferential communication bearer becomes possible. Therefore, the control unit 111 switches the display of the communication bearer icon 201 from a bearer icon of non-preferential communication to a bearer icon of preferential communication based on a definition of preferential setting.

That is, when the communication mode setting 9 is set to the WLAN priority 9a, the WLAN network of the preferential setting may be in the out-of-communication area and the public line network may be in the in-communication area. In this case, since communication using the non-preferential public line network is performed, the control unit 111 displays an icon of the public line communication bearer, that is, the non-preferential bearer, on the display unit 107. In this case, if a user having the mobile communication terminal 1 moves, the WLAN network (preferential network) may change from the out-of-communication area to the in-communication area. Then, the WLAN network, that is, the preferential communication bearer is used for next communication. Thereby, the control unit 111 converts display contents of the communication bearer icon 201 into the WLAN communication bearer icon (preferential communication bearer icon) and displays it on the display unit 107.

When the public line priority 9b is set, the public line network may be in the out-of-communication area and the WLAN network may be in the in-communication area. In this case, since communication using the non-preferential WLAN network is performed, the control unit 111 displays an icon of the WLAN communication bearer, that is, the non-preferential communication bearer, on the display unit 107. In this case, if a user having the mobile communication terminal 1 moves, the public line network (preferential network) may change from the out-of-communication area to the in-communication area. Then, the control unit 111 converts display contents of the communication bearer icon 201 into the public line communication bearer icon (preferential communication bearer icon) and displays it on the display unit 107.

As described above, it may be required to convert display contents of the communication bearer icon 201 in response to communication conditions of a communication network. In this case, the control unit 111 monitors the communication conditions of the communication network after starting of the browser.

Referring to a flowchart in FIG. 8, an example of operations is described below, which is related to monitoring the communication conditions of the communication network in the control unit 111.

For example, in a step SP 301, when detecting that a user requests starting of the browser, the control unit 111 refers to the communication mode setting 9. That is, the control unit 111 sees which is set preferential setting (WLAN priority 9a or public line priority 9b) or fixed setting (WLAN fixing 9c or public line fixing 9d). Seeing that the fixed setting is set, the control unit 111 displays the communication bearer icon 201 which represents the set WLAN communication bearer or the set public line communication bearer, on the display unit 107. Seeing that the preferential setting is set, the control unit 111 checks whether the preferential network is in the in-communication area or in the out-of-communication area, and also checks whether the non-preferential network is in the in-communication area or in the out-of-communication area, if needed. The control unit 111 determines display contents of the communication bearer icon 201 based on the communication conditions of the communication network obtained through the check and based on setting information as shown in FIG. 7a and FIG. 7b. The control unit 111 further displays the determined WLAN communication bearer icon or the determined public line communication bearer icon on the display unit 107.

At the time of starting of the browser, the control unit 111 displays the communication bearer icon 201 on the display unit 107 through the operations described above.

After that, when communication is established, a step SP 302 is performed. In the step SP 302, the control unit 111 sees whether or not the communication mode setting 9 is the preferential setting (WLAN priority 9a or public line priority 9b). When determining the communication mode setting 9 is not the preferential setting (that is, the setting 9 is the fixed setting (WLAN fixing 9c or public line fixing 9d)), the control unit 111 stops the operation that monitors communication conditions for displaying the communication bearer icon 201. It is for the following reason that the control unit 111 performs above operations. In the fixed setting, a communication network to be used for communication is fixed regardless of the communication conditions. That is, since the communication network to be used is not converted even if the communication conditions of the set communication network becomes worse, display contents of the communication bearer icon 201 is not converted. Therefore, since it is not required to monitor the conditions of the communication network in order to display the communication bearer icon 201, the operation monitoring communication conditions is completed in fixed setting.

When determining the communication mode setting 9 is the preferential setting in the step SP 302, the control unit 111 performs a step SP 303. In the step SP 303, the control unit 111 sees whether or not communication in the non-preferential communication bearer is performed. When determining the communication in the non-preferential communication bearer is performed, the control unit 111 performs a step SP 304. In the step SP 304, the control unit 111 monitors that a preferential communication bearer network changes from the out-of-communication area to the in-communication area.

For example, when a user having the mobile communication terminal 1 moves and the preferential communication bearer network is in the in-communication area, it becomes possible to use the preferential communication bearer. In this case, a step SP 305 is performed. In the step SP 305, the control unit 111 changes the communication bearer icon 201 on the display unit 107 from the non-preferential communication bearer icon to the preferential communication bearer icon. Thereby, the user of the mobile communication terminal 1 can recognize the communication bearer icon 201 is changed by seeing the display screen 7 of the display unit 107. That is, the user can distinguish that the preferential communication bearer is used for next communication.

After that, a step SP 306 is performed. In the step SP 306, the control unit 111 waits till communication in the non-preferential communication bearer is completed. When the communication in the non-preferential communication bearer is completed, a step SP 307 is performed. In the step SP 307, the control unit 111 waits till communication request is given again by the user, while operating the browser.

When the control unit 111 detects the communication request in the step SP 307, a step SP 308 is performed. In the step SP 308, communication starts by using the preferential communication bearer. After that, a step SP 309 is performed. In the step SP 309, the control unit 111 monitors whether or not the preferential communication bearer network is in the out-of-communication area. For example, when the preferential communication bearer changes into the out-of-communication area by the user of the mobile communication terminal 1 moving, a step SP 310 is performed. In the step SP 310, the control unit 111 sees whether or not the non-preferential communication bearer network is available. When the non-preferential communication bearer network is in the in-communication area, a step SP 311 is performed. In the step SP 311, the control unit 111 converts display contents of the communication bearer icon 201 to the non-preferential communication bearer. After that, the operations from the step SP 302 are repeated. When the control unit 111 determines the non-preferential communication bearer network is also in the out-of-communication area in the step SP 310, both the preferential communication bearer network and the non-preferential communication bearer network are in the out-of-communication area. In this case, the communication bearer icon 201 on the display unit 107 remains display contents of the preferential communication bearer. After that, the control unit 111 repeats the operations from the step SP 302. That is, the control unit 111 prepares for next communication request.

According to the third embodiment, a communication system which is selected and used when next communication occurs is displayed by using the icon including characters, for example, as shown in FIG. 1, like the first and second embodiments. Thereby, a communication system scheduled to be used when next communication occurs can be distinguished obviously at a glance.

### (Fourth embodiment)

A fourth embodiment is described below.

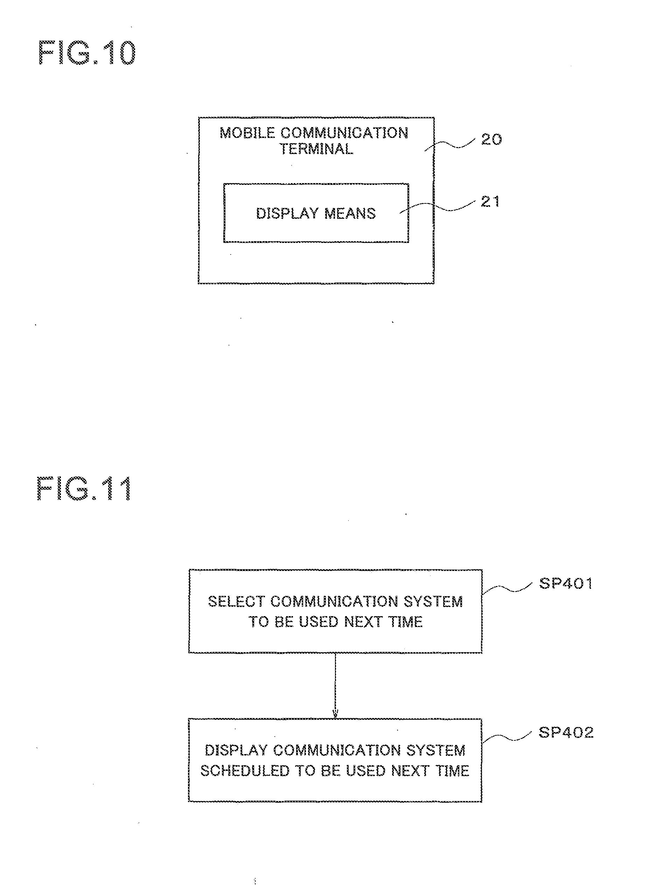

As shown in FIG. 10, a mobile communication terminal 20 of the fourth embodiment includes display means 21. The display means 21 displays a character corresponding to a communication system scheduled to be used for next communication.

In this fourth embodiment, since the communication system scheduled to be used for next communication is displayed by a character, the advantage is obtained, that the kind of the communication system scheduled to be used for next communication can be distinguished obviously at a glance.

An example of a display method in the mobile communication terminal is described below. For example, in a step SP401 in FIG. 11, the mobile communication terminal alternatively selects a communication system to be used for next communication in a plurality of kinds of predetermined communication systems. After that, in a step SP 402, a character corresponding to the selected communication system is displayed on the display means, as the communication system scheduled to be used for next communication.

### (Fifth embodiment)

A fifth embodiment is described below.

The fifth embodiment relates to a mobile communication terminal having a function in which data communication is performed by selectively using any one of a plurality of kinds of available communication systems. The mobile communication terminal of the fifth embodiment is characterized in including icon display means for displaying a communication system selected when next communication occurs on a screen thereof by using an icon, communication mode setting means at least capable of setting a preferential communication mode in which a communication system pre-registered as a preferential communication system in the plurality of kinds of communication systems by a user is preferentially used when a communication request occurs, and a control unit for selecting a preferential communication system when the preferential communication mode is set by the communication mode setting means and when the preferential communication system meets predetermined conditions, and causing the icon display means to display the icon indicating the preferential communication system as the communication system to be used when next communication occurs, and for alternatively selecting, when the preferential communication system does not meet the predetermined conditions, the a non-preferential communication system which meets predetermined conditions, and causing the icon display means to display the icon indicating the non-preferential communication system as the communication system to be used when next communication occurs.

In the configuration of the fifth embodiment, advantages described below can be obtained. That is, since a user can check a bearer communication icon when the browser starts, it is possible to distinguish which bearer is used at the time of connection with a network through a home URL or a bookmark.

Additionally, when communicating through the browser, a user can see that the bearer communication icon automatically changes when the preferential communication bearer changes into the in-communication area while the non-referential communication bearer is used for the reason that the preferential communication bearer is in the out-of-communication area. Therefore, when the WLAN network which can perform relatively-high-speed communication changes from the out-of-communication area to the in-communication area while a large file is downloaded by using the public line network which performs relatively-slow-speed communication, high-speed download using the WLAN network becomes possible, if the user cancels the current communication and resumes the download.

Further, if the user sees the bearer communication icon, it is possible to prevent the user from spending communication fee due to using an unintended bearer.

### (Sixth embodiment)

A sixth embodiment is described below.

The sixth embodiment relates to a mobile communication terminal which includes a function performing data communication by selecting any one of a plurality of kinds of available communication systems. The mobile communication terminal of the sixth embodiment includes an icon display means for displaying a communication system to be selected when next communication occurs by using an icon on a screen thereof, communication mode setting means at least capable of setting a preferential communication mode in which a communication system pre-registered as a preferential communication system in the plurality of kinds of communication systems by a user is preferentially used when a communication request occurs, and a control unit for selecting the preferential communication system when the preferential communication mode is set by the communication mode setting means and when the preferential communication system is in a communication area or moves from an out-of-communication area to a communication area, and causing the icon display means to display the icon indicating the preferential communication system as the communication system to be used when next communication occurs, and for alternatively selecting, when the preferential communication system is in the out-of-communication area, or moves from the in-communication area to the out-of-communication area, the a non-preferential communication system in the in-communication area, and causing the icon display means to display the icon indicating the non-preferential communication system as the communication system to be used when next communication occurs.

The sixth embodiment can give advantages similar to the fifth embodiment.

### (Seventh embodiment)

A seventh embodiment is described below.

The seventh embodiment relates to a method for displaying a communication system to be used when next communication occurs, as an icon, on a display unit of a mobile communication terminal having a function for performing data communication by selecting any one of a plurality of available communication systems. The seventh embodiment is characterized in including setting a preferential communication mode in which a communication system which is pre-registered as a preferential communication system in a plurality of kinds of communication systems is preferentially used when a communication request occurs, displaying, after that, an icon indicating the preferential communication system as the communication system to be used when a communication request occurs by selecting the preferential communication system when the preferential communication system meets predetermined conditions, or displaying an icon indicating an non-preferential communication system as the communication system to be used when a communication request occurs by alternatively selecting the non-preferential communication system in a communication area when the preferential communication system does not meet the predetermined conditions.

The seventh embodiment can give advantages similar to the fifth embodiment.

### (Eighth embodiment)

An eighth embodiment is described below.

The eighth embodiment relates to a method for displaying a communication system to be used when next communication occurs, as an icon, on a display unit of a mobile communication terminal having a function for performing data communication by selecting any one of a plurality of available communication systems. The eighth embodiment is characterized in including setting a preferential communication mode in which a communication system which is pre-registered as a preferential communication system in a plurality of kinds of communication systems is preferentially used when a communication request occurs, displaying, after that, an icon indicating the preferential communication system as the communication system to be used when a communication request occurs by selecting the preferential communication system when the preferential communication system is in a communication area, or displaying an icon indicating a non-preferential communication system as the communication system to be used when a communication request occurs by alternatively selecting the non-preferential communication system in a communication area when the preferential communication system is in an out-of-communication area.

The eighth embodiment can give advantages similar to the fifth embodiment.

Although embodiments on the present invention are described above in detail with reference to drawings, specific configurations are not limited to the embodiment described above. Even if design change is performed without departing from the substance of the present invention, such design is included within the scope of the present invention. For example, available communication bearers are not limited to the public line communication bearer and the WLAN communication bearer. A plurality kinds of public line communication bearers (wireless communication system or service using the public line) are applicable, and a plurality of kinds of WLAN communication bearers (wireless communication system or service using a WLAN) are applicable. The number of available communication bearers may be three or more than three. When three or more than three communication bearers are available, it is only necessary to set priority, for example, a first preferential communication bearer, a second preferential communication bearer, and the like. In addition, after communication using the preferential communication bearer is completed, the preferential communication bearer network may become the out-of-communication area during browsing the browser. In this case, if the non-preferential communication bearer network is in the in-communication area when the preferential communication bearer network becomes the out-of-communication area, the preferential communication bearer icon display obviously changes into the non-preferential communication bearer icon display.

By the way, the Patent Literature 1 describes the configuration in which the mobile communication terminal automatically selects the communication bearer based on a reception level emphasis mode, a cost emphasis mode, or a communication speed emphasis mode. However, the mobile communication terminal may not be required, which automatically selects the communication bearer based on a reception level, cost, or communication speed, but the mobile communication terminal may be required, in which the communication bearer itself can be selected based on user's discretion. It is similar in that driver's memory is frequently better than a car navigation system in a road which the driver knows well.

Meanwhile, for example, when the control unit (communication mode setting unit) which performs communication mode setting as show in the second and third embodiment is installed, a user can select the communication bearer. Thereby, it becomes possible to provide a mobile communication terminal corresponding to the user's needs.

While the present invention has been particularly shown and described with reference to exemplary embodiments thereof, the present invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2008-046771, filed on February, 27, 2008, the disclosure of which is incorporated herein in its entirety by reference.

### INDUSTIUAL APPLICABILITY

The present invention can be widely applied to not only the mobile phone, but also the mobile communication terminal, for example, a PDA (Personal Digital Assistant) having a wireless communication function, and the like.

## Claims

1. A mobile communication terminal, comprising:
display means for displaying a character corresponding to a communication system scheduled to be used for next communication.

2. The mobile communication terminal according to claim 1, wherein the character corresponding to the communication system scheduled to be used for next communication is displayed on a screen of the display means in the form of an icon.

3. The mobile communication terminal according to any one of claim 1 and claim 2, further comprising:
a communication mode setting unit which sets one of a plurality of predetermined communication modes whose predetermined conditions for alternatively selecting the communication system to be used for next communication from a plurality of kinds of predetermined communication systems are different from each other.

4. The mobile communication terminal according to claim 3, wherein one of the communication modes is a preferential communication mode in which the communication system to be used for next communication is selected based on pre-registered priority.

5. The mobile communication terminal according to any one of claim 3 and claim 4, wherein one of the communication modes is a fixed communication mode using only prespecified communication system in the plurality of kinds of communication systems.

6. The mobile communication terminal according to claim 4, further comprising:
a control unit, when it is detected that a communication system having high priority is not available while the preferential communication mode is set, the control unit causing the display means to display a character corresponding to an available communication system having lower priority than the communication system as the communication system scheduled to be used for next communication, and while the character corresponding to the communication system having lower priority is displayed on the display means and when it is detected that a communication system having higher priority than the communication system of the character display becomes available, the control unit converting the character displaying on the display means to the character corresponding to the available communication system having high priority.

7. The mobile communication terminal according to any one of claim 3 to claim 6, wherein the communication mode setting unit sets the communication mode for each communication application.

8. The mobile communication terminal according to any one of claim 1 to claim 7, further comprising: at least a function for communicating by connecting to a public line and a function for communicating by connecting to a wireless LAN (Local Access Network) access point.

9. The mobile communication terminal according to any one of claim 1 to claim 8, wherein the character corresponding to the communication system scheduled to be used for next communication is displayed in a web browser display screen.

10. A display method, comprising:
selecting alternatively a communication system scheduled to be used for next communication from a plurality of kinds of predetermined communication systems, and
displaying a character corresponding to the selected communication system on display means installed in a mobile communication terminal.

11. The display method according to claim 10, wherein the character corresponding to the communication system scheduled to be used for next communication is displayed on a screen of the display means in the form of an icon.

12. The display method according to any one of claim 10 and claim 11, wherein when it is detected that a communication system having high priority is not available while a preferential communication mode, in which the communication system to be used for next communication is selected based on pre-registered priority, is set, the character corresponding to an available communication system having lower priority than the communication system is displayed on the display means as the communication system scheduled to be used for next communication, and while the character corresponding to the communication system having low priority is displayed on the display means and when it is detected that a communication system having higher priority than the communication system displayed by the character becomes available, the character displayed on the display means is converted to the character corresponding to the available communication system having higher priority.

13. The display method according to any one of claim 10, claim 11 and claim 12, wherein selection of the communication system to be used for next communication is performed for each communication application.

14. The display method according to any one of claim 10 to claim 13, wherein one of the plurality of kinds of predetermined communication systems is a public line communication bearer using a public line, and different one of the plurality of kinds of predetermined communication systems is a WLAN (Wireless Local Area Network) bearer via an wireless LAN (Local Area Network) access point.

15. The display method according to any one of claim 10 to claim 14, wherein the character corresponding to the communication system scheduled to be used for next communication is displayed in a web browser display screen.

16. A display control program, for allowing:
alternatively selecting a communication system scheduled to be used for next communication from a plurality of kinds of predetermined communication systems, and
causing display means installed in a mobile communication terminal to display a character corresponding to the selected communication system.

17. The display control program according to claim 16, for allowing: causing the display means to display the character corresponding to the communication system scheduled to be used for next communication on a screen of the display means in the form of an icon.

18. The display control program according to any one of claim 16 and claim 17, for allowing: when it is detected that a communication system having high priority is not available while a preferential communication mode, in which the communication system scheduled to be used for next communication is selected based on pre-registered priority, is set, causing the display means to display the character corresponding to an available communication system having lower priority than the communication system as the communication system scheduled to be used for next communication, and: while the character corresponding to the communication system having low priority is displayed on the display means and when it is detected that a communication system having higher priority than the communication system displayed by the character becomes available, causing the display means to convert the character displayed thereon to the character corresponding to the available communication system having high priority.

19. The display control program according to any one of claim 16, claim 17 and claim 18, for allowing: performing selection of the communication system scheduled to be used for next communication for each communication application.

20. The display control program according to any one of claim 16 to claim 19, wherein one of the plurality of kinds of predetermined communication systems is a public line communication bearer using a public line, and different one of the plurality of kinds of predetermined communication systems is a WLAN (Wireless Local Area Network) bearer via an wireless LAN (Local Area Network) access point.

21. The display control program according to any one of claim 16 to claim 20, for allowing: displaying the character corresponding to the communication system scheduled to be used for next communication in a web browser display screen.
